# EUROPEAN PATENT APPLICATION

(11) **EP 2 366 528 A1**
(43) Date of publication of application: **21.09.2011**
(21) Application number: 09833156.4
(22) Date of filing: 09.12.2009
(51) Int. Cl.: B29C 49/16, B29C 49/48, B29L 22/00

(54) **METHOD FOR PRODUCING SYNTHETIC RESIN CONTAINER**

(30) Priority: 17.12.2008 JP 2008320868
(71) Applicant: Toyo Seikan Kaisha, Ltd., Tokyo 100-8522 (JP)
(72) Inventor: MAEDA, Kouji, Yokohama-shi Kanagawa 230-0001 (JP); HIKICHI, Noritaka, Yokohama-shi Kanagawa 230-0001 (JP); SUGIURA, Keishi, Yokohama-shi Kanagawa 230-0001 (JP); MIYAKAWA, Nobuhide, Yokohama-shi Kanagawa 230-0001 (JP); MORI, Kenji, Yokohama-shi Kanagawa 230-0001 (JP)
(74) Representative: Liebetanz, Michael
(86) International application number: PCT/JP2009/006726
(87) International publication number: WO 2010/070846

(57) **Abstract**

Disclosed is a method for producing a synthetic resin container comprising: a primary blow step of forming a bottomed cylindrical preform 10 made of a thermoplastic resin into a first molded intermediate 11 by blow molding; a constriction step of constricting the first molded intermediate 11 by depressurizing the inside of the first molded intermediate 11, to obtain a second molded intermediate 12; and a secondary blow step of placing the second molded intermediate 12 in a blow mold 1 and transferring an inner surface shape of the blow mold thereto by blow molding, to mold the secondary molded intermediate 12 into a predetermined container shape. According to this constitution, even though a body portion of each container has a deeply constricted shape, the inner surface shape of the blow mold can be successfully transferred thereto, and hence the synthetic resin containers molded into a predetermined container shape with excellent molding properties can be efficiency mass-produced.

## Description

### Technical Field

The present invention relates to a method for molding a synthetic resin container of a predetermined container shape by transferring an inner surface shape of a blow mold, and more particularly, it relates to a method for producing a synthetic resin container having improved molding properties.

### Background Art

Heretofore, containers which are obtained by forming bottomed cylindrical preforms from a synthetic resin such as polyethylene terephthalate and then molding the preforms into a bottle shape by, e.g., stretch blow molding have been known as containers that contain contents of various liquid substances such as beverages, soy sources, cooking oils, and liquid detergents. Furthermore, in such synthetic resin containers, it has been known that containers which are filled with the heat-sterilized contents and used in this state are required to have high heat resistance against heat contraction, and hence, so-called two-stage blow molding is carried out (see, e.g., Patent Document 1).
Moreover, it has been known that containers of a relatively large volume in such synthetic resin containers have each a deeply recessed grasping concave portion formed in a container body portion to facilitate portability thereof (see, e.g., Patent Document 2).

Patent Document 1: Japanese Patent Application Laid-open No. 1987-030018
Patent Document 2: Japanese Patent Application Laid-open No. 2003-103612

### Disclosure of the Invention

Meanwhile, in the Patent Document 1, during secondary blow molding in the two-stage blow molding, molded primary intermediate products are heated to forcibly remove internal residual stress (residual strain) therefrom. Furthermore, to prevent the increase in thermal crystallization in this step, a stretch ratio of stretch molding from the preforms to the molded primary intermediate product, a mold temperature of a primary blow mold, and others are controlled.
However, the thermal crystallization progresses when the internal residual stress is removed by heating, and in consequence, the molded secondary intermediate products becomes relatively hard, which causes the deterioration of the shape transferring properties during the secondary blow molding. Therefore, for containers whose corners are required to be clearly shaped, or containers whose fine irregular portions or whose large concave portions are required to be shaped, a countermeasure is taken by increasing a pressure of secondary blow air.

On the other hand, in the Patent Document 2, a blow mold having a movable nest provided thereto is utilized. During the progress of the blow molding, the movable nest that stands by at a predetermined position is operated toward the deepest position of the grasping concave portion of each container, whereby the deeply recessed grasping concave portion is formed in the container body portion.
However, the blow mold provided with such a movable nest has a complicated mold structure, and hence its adjustment and maintenance are troublesome. Therefore, it is desirable to enable molding each container body having the deeply recessed portion only by transferring an inner surface shape of the blow mold without providing the movable nest.

In view of the above problems, the present invention has been developed, and it is an object of the present invention to provide a method for producing synthetic resin containers having suitable heat resistance and shape transferring properties by blow molding molded intermediates having suppressed crystallization while reducing internal residual stress. Furthermore, it is another object of the present invention to provide a method for producing synthetic resin containers that can efficiently mass-produce synthetic resin containers molded into a predetermined container shape with good molding properties by successfully transferring an inner surface shape of a blow mold, for example, even in a case of molding containers each having a deeply recessed form such as a grasping concave portion which is deeply recessed in the container body portion.

A method for producing a synthetic resin container according to the present invention comprises a primary blow step of forming a bottomed cylindrical preform made of a thermoplastic resin into a first molded intermediate by blow molding; a constriction step of constricting the first molded intermediate by reducing a blow air pressure in the first molded intermediate molded in the primary blow step, to form a second molded intermediate; and a secondary blow step of placing the second molded intermediate in a blow mold, to transfer an inner surface shape of the blow mold, thereby molding the secondary molded intermediate into a predetermined container shape.

According to the method for producing the synthetic resin containers of the present invention, the inner surface shape of the blow mold can be successfully transferred, thereby enabling the efficient mass-production of the synthetic resin containers molded into the predetermined container shape with excellent molding properties.

### Brief Description of the Drawings

FIG. 1 is an explanatory view showing an example of an apparatus that can preferably accomplish a method for producing synthetic resin containers according to the present invention;
FIG. 2 is a diagram taken along the X-X line in FIG. 1;
FIG. 3 is flow views showing an example of a primary blow step in the method for producing the synthetic resin containers according to the present invention;
FIG. 4 is flow views showing an example of a constriction step in the method for producing the synthetic resin containers according to the present invention; and
FIG. 5 is flow views showing an example of a secondary blow step in the method for producing the synthetic resin containers according to the present invention.

### Best Mode for Carrying out the Invention

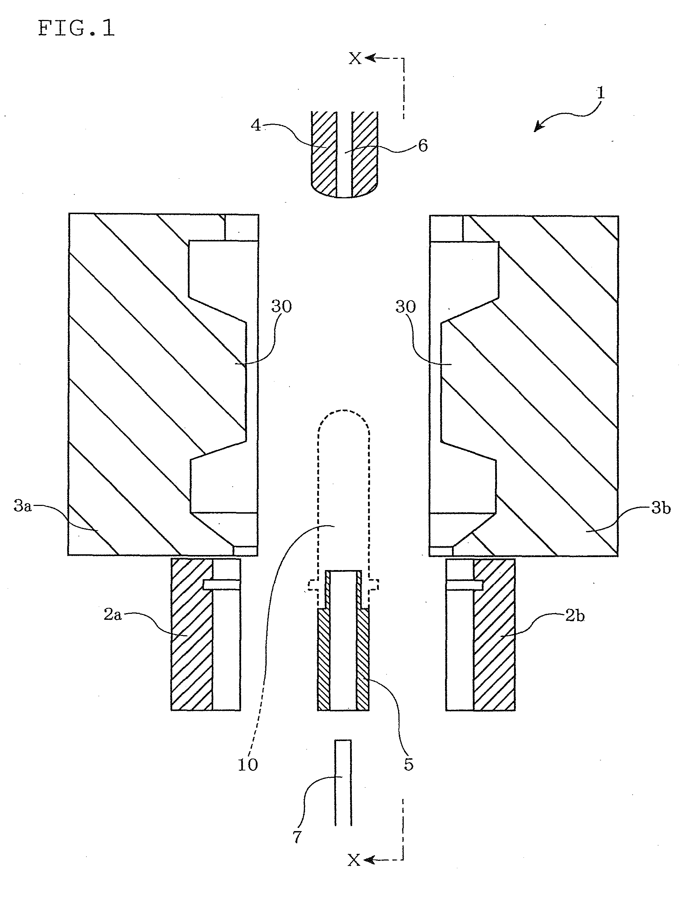

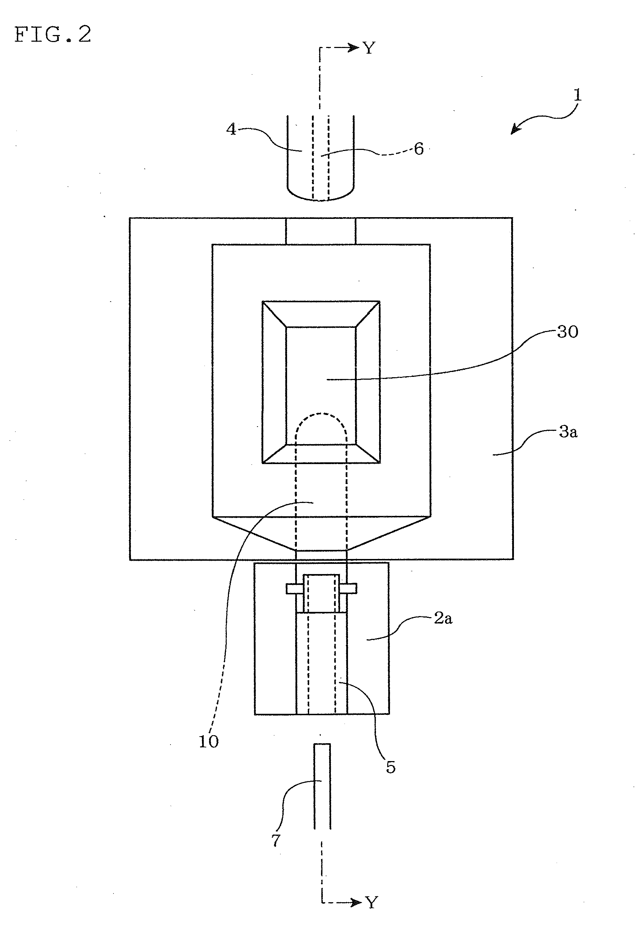

Hereinafter, a preferred embodiment according to the present invention will be described with reference to the drawings.
Here, FIG. 1 is an explanatory view showing an example of an apparatus that can preferably accomplish a method for producing synthetic resin containers according to this embodiment. Further, FIG. 2 is a diagram taken along the X-X line in FIG. 1, and FIG. 1 corresponds to a cross-sectional view taken along the Y-Y line in FIG. 2.
In the apparatus depicted in these drawings, a blow mold 1 includes at least a mandrel 5 that has both a role as a blow nozzle from which blow air is blown to a preform 10 and a role as a jig that supports the preform 10, fixing dies 2a and 2b that fix the preform 10 supported by this mandrel 5 at a mold closing position, cavity dies 3a and 3b, and a base die 4.

In this embodiment, the preform 10 is supplied to a molding station where such a blow mold 1 is installed, and the respective steps of a primary blow step, a constriction step, and a secondary blow step are sequentially carried out in this order with respect to the supplied one preform 10 at a position where a relative positional relationship between the preform 10 and the blow mold 1 is fixed. As a result, time and labor for carrying a primary molded intermediate 11 or a secondary molded intermediate 12 which will be described later between the respective steps can be omitted, and an inner surface shape of the blow mold 1, i.e., a shape of a cavity space formed when the blow mold 1 is closed can be transferred while achieving simplification of the apparatus, space saving, and others, thereby producing a synthetic resin container M formed into a predetermined container shape.

### [Primary Blow Step]

In the primary blow step, a previously prepared bottomed cylindrical preform 10 made of a thermoplastic resin is formed into a primary molded intermediate 11 by blow molding.

As the preform 10, a molded material obtained by molding the thermoplastic resin into the bottomed cylindrical shape by, e.g., injection molding or compression molding is used.
As the thermoplastic resin, any resin can be used as long as it can be subjected to the blow molding. Specifically, polyethylene terephthalate, polybutylene terephthalate, polyethylene naphthalate, polycarbonates, polyarylates, polylactates, thermoplastic polyesters such as copolymers of these materials, blends of these resins, blends of these resins and other resins, and others can be preferably used. In particular, a polyester-based resin such as polyethylene terephthalate can be preferably used. Additionally, an acrylonitrile resin, a polypropylene, a propylene-ethylene copolymer, polyethylene, and others can be also used. To these resin materials, functional materials such as a known a crystal nucleating agent or an oxygen absorbent may be appropriately added.

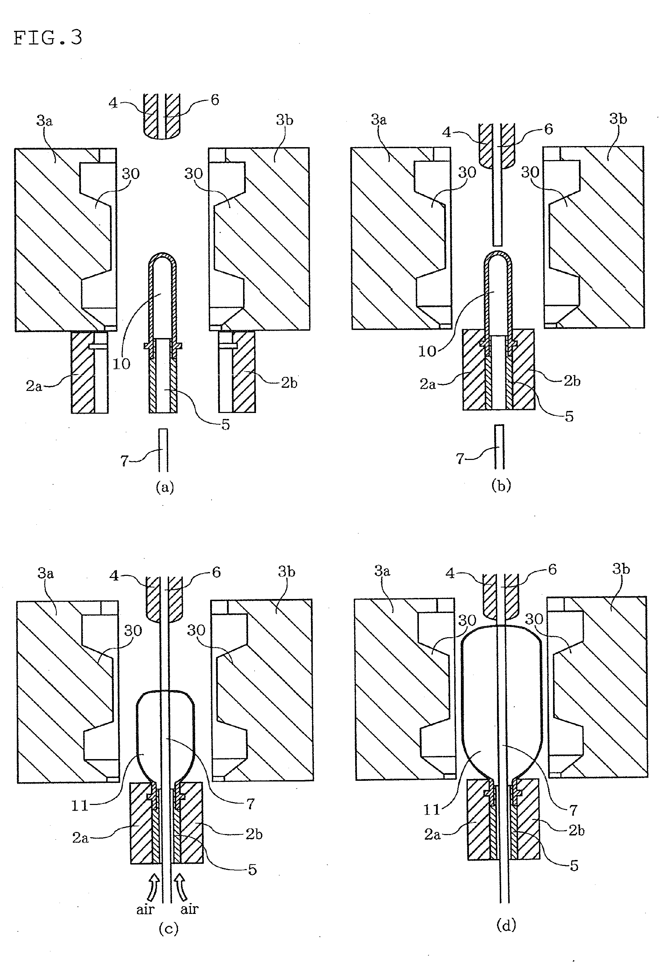

FIG. 3 shows flow views regarding an example of the primary blow step, and in the example depicted in FIG. 3, the preform 10 is supported on the mandrel 5 so that an opening portion side of the preform 10 is placed on the lower side, and it is arranged between the cavity dies 3a and 3b which are in a mold opening state prior to performing the blow molding (see FIG. 3(a)).
It is to be noted that a position near an opening portion of the preform 10 is usually scarcely stretched, and is formed as a mouth portion of a container as it is. In the following description, such a position near the opening portion of the preform 10 will be referred to as a nozzle portion, and a region other than the nozzle portion will be referred to as a body portion.

At this time, the preform 10 which is to be subjected to the primary blow step is heated in advance so that a region which is to be stretched by the blow molding, i.e., the body portion of the preform 10 can have a stretchable temperature equal to or above a glass-transition temperature, but the preform 10 might be heated to the above temperature by residual heat of the molding, if the preform 10 is in a state immediately after the preform 10 is molded by the injection molding or the compression molding. In such a case, the preform 10 can be subjected to the primary blow step as it is, without heating the preform 10.

The opening portion side of the preform 10 arranged between the cavity dies 3a and 3b is fixed at the mold closing position by the fixing dies 2a and 2b. Then, at the same time or before and after this fixation, the base die 4 moves down to this mold closing position, a press rod 6 provided to be vertically movable through the inside of the base die 4 is moved down, and an end of the press rod 6 stands by at a position where the end is close to or is in contact with the preform 10 (see FIG. 3(b)).

Then, while keeping the cavity dies 3a and 3b in a mold opening state, a stretch rod 7 vertically movably provided through the inside of the mandrel 5 is moved up, and blow air is blown into the preform 10 via the inside of the mandrel 5 via a blow air supply source and a valve mechanism which are not shown, thereby starting the blow molding (see FIG. 3(c)). As a result, the preform 10 is stretched to be formed into a first molded intermediate 11 (see FIG. 3(d)). At this time, the press rod 6 is moved up in synchronization with the stretch rod 7 so that the end side of the stretched preform 10 can be sandwiched between the press rod 6 and the stretch rod 7, whereby a stretching direction of the preform 10 can be regulated to avoid the deviation of the stretching direction.

As described above, in the first blow step of this embodiment, the preform 10 is stretched by so-called free blow molding which is blow molding without transferring the mold (the blow mold), to be formed into the first molded intermediate 11. At this time, in regard to a size of the first molded intermediate 11, it is preferable to sufficiently stretch the preform 10 so that the body portion of the preform 10 stretches to be 1.2 to 5.2 in the longitudinal direction and is stretches to be 2 to 7 in the transverse direction, in view of preventing the first molded intermediate 11 from being an uneven thickness.

### [Constriction Step]

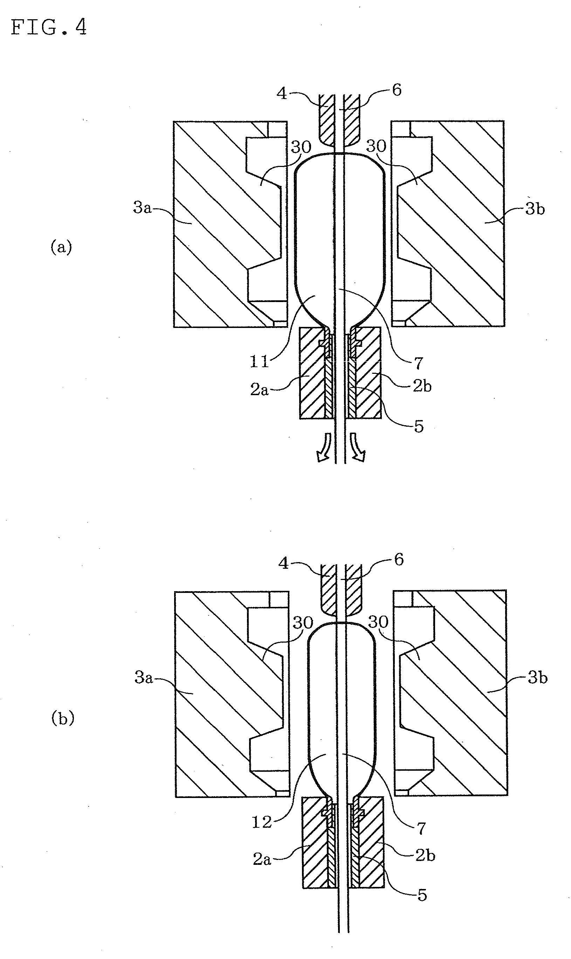

In the constriction step, a blow air pressure in the first molded intermediate 11 formed by stretching the preform 10 in the primary blow step is reduced (see FIG. 4(a), whereby the first molded intermediate 11 is constricted to obtain a second molded intermediate 12 (see FIG. 4(b)).
It is to be noted that FIG. 4 is flow views showing an example of the constriction step.

Here, the first molded intermediate 11 immediately after formed in the primary blow step usually keeps a high temperature equal to or above a glass-transition temperature of the thermoplastic resin used as a material by heat of the preform 10 at the time of being subjected to the blow molding and shear heat of the thermoplastic resin generated by stretching depending on conditions such as a stretching speed. At such a high temperature, an internal pressure enough to maintain the shape of the first molded intermediate 11 remains in the first molded intermediate 11 in balance with constriction force caused owing to residual stress generated at the time of stretching the preform 10.

Incidentally, there has been known a conventional technology which comprises including a step corresponding to the primary blow step of this embodiment, cooling down a molded intermediate obtained in such a step to a temperature equal to or below, or slightly higher than a glass-transition temperature of a thermoplastic resin used as a material to solidify the molded intermediate without depressurizing the inside of the molded intermediate, then taking out the molded intermediate from a blow molding apparatus, constricting the molded intermediate in another step by, e.g., reheating the intermediate by another apparatus such as an oven, and blow molding the molded intermediate to form the same into a final product shape in still another step by a blow molding apparatus different from the apparatus used to mold the molded intermediate.
In contrast to such a conventional technology, this embodiment of the present invention comprises utilizing one set of the blow mold 1 only installed on the molding station to supply the one preform 10 to the molding station, performing the primary blow step between the dies (between the cavity dies 3a and 3b that stand by in the mold opening state in the example shown in the drawings) of the blow mold 1 that stand by in the mold opening state to form the first molded intermediate 11, performing the constriction step without changing a position where the first molded intermediate 11 is supported by the mandrel 5, to form the second molded intermediate 12, then closing the blow mold 1, and performing the later-described secondary blow step, thereby preventing the fluctuation of a relative positional relationship between the position at which the respective steps are performed and the blow mold 1. Therefore, the cooling/solidification and the reheating step performed in the above-described conventional technology can be omitted to improve an energy efficiency. In addition, time and labor for carrying the first molded intermediate 11 and the second molded intermediate 12 between the respective steps can be omitted, and the simplification of the apparatus and space saving can be achieved.

To depressurize the inside of the first molded intermediate 11, the inside of the first molded intermediate 11 that is in a positive pressure state immediately after the primary blow step may be opened to the air through a valve mechanism not shown, or may be connected to, e.g., a vacuum pump not shown to forcibly exhaust the first molded intermediate 11. At this time, when depressurization is accomplished to provide a pressure lower than that in the first molded intermediate 11 immediately after the blow molding and the intermediate is constricted to such a level as to be accommodated in a product shape portion of the cavity dies 3a and 3b, the second molded intermediate 12 obtained by constricting the first molded intermediate 11 can be supplied to the secondary blow step which is the subsequent step at this point in time.

In this constriction step, since the first molded intermediate 11 is constricted by depressurizing the inside of the first molded intermediate 11, the first molded intermediate is reasonably and naturally constricted to be formed into the second molded intermediate 12. Therefore, residual strain generated in the first molded intermediate 11 by the blow molding can be reduced to prevent such residual strain from being taken over to the second molded intermediate 12 as it is.

Further, as to a size of the second molded intermediate 12, it is preferable that a circumference of a maximum circumference portion of the second molded intermediate 12 (a maximum base diameter portion at a substantially central position of a height of the second molded intermediate 12 excluding the nozzle portion in this embodiment) is slightly smaller than a maximum circumference of the product shape portion of the cavity dies 3a and 3b. When such a configuration is adopted, a small stretch amount of the second molded intermediate 12 can suffice in the later-described secondary blow step, and a large amount of additional residual strain is not generated, which is desirable. Specifically, it is preferable for the circumference of the maximum circumference portion of the second molded intermediate 12 to be 85 to 99% of the maximum circumference of the product shape portion of the cavity dies 3a and 3b.
It is to be noted that, although FIG. 4 shows the example in which the first molded intermediate 11 is constricted in a radial direction (a width direction) thereof, the first molded intermediate 11 may be also appropriately constricted in a height direction thereof.

Furthermore, when the inside of in the first molded intermediate 11 is extremely rapidly depressurized, the surface of the second molded intermediate 12 might wrinkle in some cases. Therefore, when depressurizing the inside of the first molded intermediate 11, it is preferable that a pressure reducing speed (a ratio at which the pressure is reduced per unit time) is adjusted so as to decelerate without bringing about any obstacles in other operations/steps by, e.g., preventing a molding time from exceeding an allowable range to avoid the generation of the wrinkles on the surface of the second molded intermediate 12, and such speed adjustment is also desirable for reduction in the residual strain.

Moreover, in the constriction step, in constricting the first molded intermediate 11, it is preferable that the first molded intermediate 11 is constricted to form the second molded intermediate 12 only by depressurizing the inside of the first molded intermediate 11, without heating the first molded intermediate 11 from the outside. When the constriction is carried out by heating from the outside, a degree of crystallization of the second molded intermediate 12 increases and the second molded intermediate 12 is hardened. However, such a phenomenon is prevented by performing the constriction without heating from the outside, and transferring properties with respect to a molding surface at a time of transferring the inner surface shape of the blow mold 1 can be improved. This technique will be described later.
It is to be noted that the omission of the heating from the outside is also efficient in view of energy.

### [Secondary Blow Step]

In the secondary blow step, the second molded intermediate 12 is placed in the blow mold 1, and the blow molding is performed in this state, whereby an inner surface shape of the blow mold 1 is transferred to mold the intermediate into a predetermined container shape.

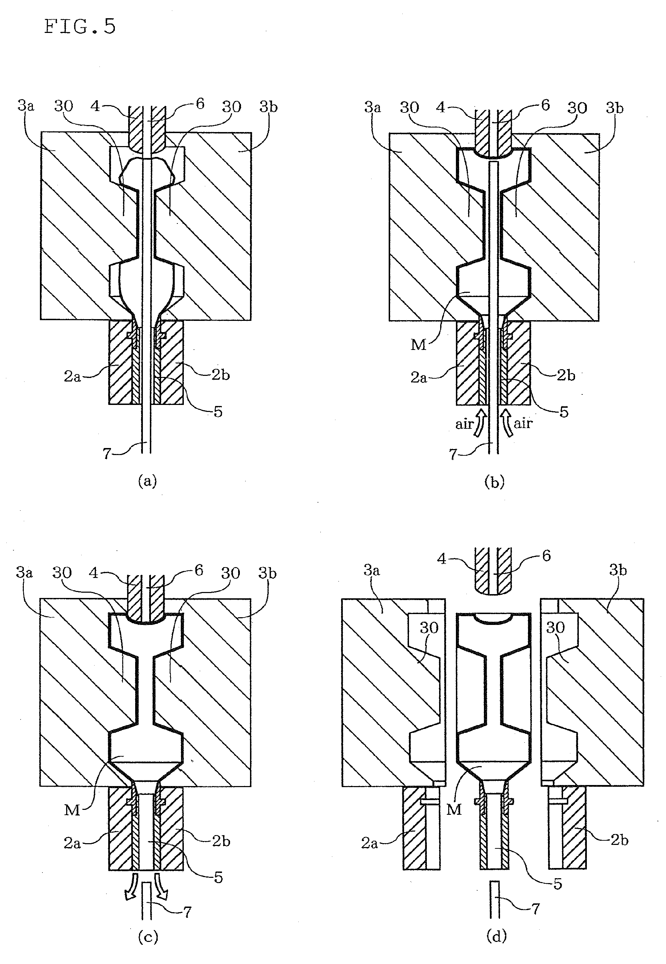

FIG. 5 is flow views showing an example of the secondary blow step, and in the example of FIG. 5, the cavity dies 3a and 3b move in such a direction as to be closer to each other, whereby a mold closing operation of the blow mold 1 is carried out.
In this embodiment, the fixing dies 2a and 2b and the base die 4 are in the standby mode at the mold closing position in the primary blow step described above, but for example, when the fist molded intermediate 11 is greatly inflated additionally in a height direction and then constricted, the base die 4 may be appropriately moved.

Moreover, on the inner surface of each of the cavity dies 3a and 3b (the blow mold 1), for example, a protruding portion 30 that protrudes into a cavity space is formed to form a shape deeply recessed in the container body portion such as the grasping concave portion deeply recessed in the container body portion. Then, the protruding portions 30 of the cavity dies 3a and 3b come into contact with the second molded intermediate 12 when the mold closing operation is carried out, thereby pressing and deforming the second molded intermediate 12.

As described above, when the application of heat from the outside to the first molded intermediate 11 is prevented in the constriction step, it is possible to improve the transferring properties with respect to the molding surface at a time of transferring the inner surface shape of the blow mold 1. Therefore, at the time of performing the mold closing operation of the blow mold 1, there can also be enhanced the transferring properties when the protruding portions 30 formed on the inner surface of the blow mold 1 come into contact with the second molded intermediate 12 to press and deform it.

Further, at the time of performing the mold closing operation, hermetically closing the second molded intermediate 12 is preferable. If this operation is performed, the inside of the second molded intermediate 12 is appropriately pressurized when pressing and deforming the second molded intermediate 12. As a result, this pressurization and the movement of the cavity dies 3a and 3b exert a synergistic effect, and the second molded intermediate 12 is preferably pressed against positions other than the protruding portions 30, thereby further improving the transferring properties with respect to the molding surface.

When the mold closing operation is completed, the press rod 6 is retracted into the base die 4, blow air is blown into the second molded intermediate 12 through the inside of the mandrel 5 by using the blow air supply source and the valve mechanism which are not shown, the second molded intermediate 12 is appressed against the inner surface of the blow mold 1, and the inner surface shape of the blow mold 1 is transferred to provide the container M (see FIG. 5(b)).
It is to be noted that the press rod 6 is moved up to fit its position (a lower end position in FIG. 5) with the base die 4 in the example shown in FIG. 5, but the stretch rod 7 may be further moved up in synchronization with the upward movement of the press rod 6 before the blow air is blown in. Such movement enables further stretching a bottom portion of the pressed and deformed second molded intermediate 12, thus reducing the radial thickness of the container bottom portion.

Subsequently, the stretch rod 7 is retracted, a post-treatment, e.g., cooling blow is carried out, and then the container M is exhausted (see FIG. 5(c)). The cooling blow can be effected by, e.g., blowing cooling air into the container M from a non-illustrated cooling air supply hole provided in the stretch rod 7. When performing the cooling blow in this manner, after the end of the cooling blow, the container M may be exhausted in the wake of the retraction of the stretch rod 7 or while effecting the retraction of the stretch rod 7.
Subsequently, the fixing dies 2a and 2b, the cavity dies 3a and 3b, and the base die 4 are moved to mold opening positions to open the blow mold 1, and then the molded container M is taken out (see FIG. 5(d)).

According to this embodiment, as described above, even though the container body portion is deeply recessed to form a grasping concave portion deeply recessed in the container body portion, the inner surface shape of the blow mold 1 can be successfully transferred through the respective steps of the primary blow step, the constriction step, and the secondary blow step as described above, and the synthetic resin containers M molded into a predetermined container shape with good molding properties can be efficiently mass-produced.

Although the present invention has been explained based on the preferred embodiment, the present invention is not restricted to the foregoing embodiment, and it is needless to say that the present invention can be modified in many ways within the scope of the present invention.

For example, the above description has been given as to the example using no mold (the example of the free blow molding in which stretching is performed without transferring a shape of the blow mold) when forming the preform 10 into the first molded intermediate 11 by the blow molding in the primary blow step according to the foregoing embodiment. Such an example is advantageous in terms of facilities and energy costs, because the use of a mold other than the blow mold and heating means for the other mold is not required. Furthermore, the first molded intermediate 11 can be blow molded by using a different blow mold in which a cavity space is formed in accordance with a shape and a size required for the first molded intermediate 11.

When subjecting the first molded intermediate 11 to the blow molding by using a different blow mold, it is preferable to set a temperature of the blow mold to a temperature at which a temperature of the first molded intermediate 11 to be molded is not extremely lowered and not extremely increased so that a degree of crystallization of the thermoplastic resin used as a material cannot be raised. Specifically, it is preferable to set the temperature of the blow mold to a temperature which is substantially equivalent to a temperature of the preform 10 at the time of blow molding (±5°C of a temperature of the preform 10) to a temperature higher than the temperature of the preform 10 by a temperature increased by the shear heat generation at the time of stretch (e.g., approximately ±20°C of the temperature of the preform 10).

Furthermore, when accomplishing the invention in such a conformation, since the blow molding can be effected in the cavity space formed by the blow mold, a pressure of the blow air for forming the first molded intermediate 11 can be appropriately set to a high value, and a pressure to be reduced is thereby appropriately changed.

Moreover, when both the blow mold used for molding the first molded intermediate 11 and the blow mold used for effecting the blow molding with respect to the second molded intermediate 12 to obtain the container M are provided, like Japanese Patent Application Laid-open No. 1996-230026 or Japanese Patent Application Laid-open No. 2002-254502, it is preferable to share, e.g., the blow nozzle and the stretch rod as much as possible and adopt a configuration that the former member and the latter member can be easily exchangeable, thus achieving reduction in facility cost or space saving.

It is to be noted that a cavity space in a die used for molding a molded intermediate is smaller than a cavity space in a die used for molding a final product in an example disclosed in the above publication. On the other hand, in the present invention, sizes of the cavity spaces are reversed so that the cavity space for a molded intermediate is larger than the cavity space for a final product, the first molded intermediate 11 after the blow molding is constricted by depressurization to have a size slightly smaller than the cavity space for a product, thus accommodating the first molded intermediate 11 in the product die.

Additionally, when stretching the preform 10 in the primary blow step, a temperature of the blow air may be appropriately increased within the range that a degree of crystallization of the first molded intermediate 11 is not extremely increased. Further, in regard to a temperature of blow air when molding the container M in the secondary blow step, if hardness of the finally obtained container M is not a problem in particular, high-temperature hot air whose temperature has been increased as long as transferring properties do not have a problem may be utilized to increase a degree of crystallization or reduce residual strain, thus further improving heat resistance of the container M.

Further, a mold temperature of the blowing mold (which is the mold for blow molding the second molded intermediate 12 and is the blow mold 1 in the foregoing embodiment) for a final product is preferably set to a lower value to soften the final product and to increase transferring properties. However, it is no problem that the container M as the final product is relatively hard, and the mold temperature may be increased as long as the transferring properties have no problem to increase the degree of crystallization of the container M or reduce the residual strain if a heat resistance defect is a problem.

Furthermore, although the example of the synthetic resin container M whose container body portion is deeply recessed has been explained in the foregoing embodiment, the present invention is not restricted to such a container shape, the inner surface shape of the blow mold 1 can be successfully transferred and each synthetic resin container can be molded into a predetermined container shape with good molding properties even in case of producing synthetic resin containers having various container shapes.
Furthermore, in such a case, since the protruding portions 30 of cavity dies 3a and 3b used for forming constriction do not press the material and hence a processing amount is reduced, residual strain is further decreased, and the synthetic resin container having further improved heat resistance can be formed.

### Industrial Applicability

The present invention can be extensively used in various product fields as the method for producing a synthetic resin container having a predetermined container shape by transferring an inner surface shape of a blow mold.

- 1: blow mold
- 3a, 3b: cavity die
- 30: protruding portion
- 6: press rod
- 7: stretch rod
- 10: preform
- 11: first molded intermediate
- 12: second molded intermediate
- M: container

## Claims

1. A method for producing a synthetic resin container comprising:
a primary blow step of forming a bottomed cylindrical preform made of a thermoplastic resin into a first molded intermediate by blow molding;
a constriction step of constricting the first molded intermediate by reducing a blow air pressure in the first molded intermediate obtained in the primary blow step, to form a second molded intermediate; and
a secondary blow step of placing the second molded intermediate in a blow mold, followed by blow molding, to transfer an inner surface shape of the blow mold, thereby molding the secondary molded intermediate into a predetermined container shape.

2. The method for producing the synthetic resin container according to claim 1, wherein the constriction step is carried out without applying heat from the outside.

3. The method for producing the synthetic resin container according to any one of claims 1 and 2, wherein, in the primary blow step, the preform is formed into the first molded intermediate by free blow molding in which the blow molding is carried out without transferring the shape of the mold.

4. The method for producing a synthetic resin container according to claim 3, wherein, when forming the preform into the first molded intermediate by the free blow molding, an end side of the preform is held between a stretch rod and a press rod synchronized with the stretch rod.

5. The method for producing a synthetic resin container according to any one of claims 1 to 4, wherein the preform is supplied to a molding station where the blow mold is installed, and the respective steps are performed with respect to the one supplied preform at a position where a relative position between the preform and the blow mold is fixed.

6. The method for producing a synthetic resin container according to claim 5,
wherein the primary blow step and the constriction step are performed between die pieces of the blow mold that stands by in a mold opening state, and then the blow mold is closed to carry out the second blow step.

7. The method for producing a synthetic resin container according to any one of claims 1 to 6, wherein, in the secondary blow step, when a mold closing operation of the blow mold is performed, protruding portions formed on inner surfaces of the blow mold come into contact with the second molded intermediate to push and deform the second molded intermediate.

8. The method for producing a synthetic resin container according to claim 7, wherein, when a mold closing operation of the blow mold is performed, the inside of the second molded intermediate is hermetically closed.
